Europäisches Patentamt

European Patent Office

Office européen des brevets

(11) Veröffentlichungsnummer: **0 276 441 B1**

(19)

## EUROPÄISCHE PATENTSCHRIFT

(12)

(45) Veröffentlichungstag der Patentschrift: **27.11.91**

(51) Int. Cl.⁵: **F16J 15/32**

(21) Anmeldenummer: **87118430.5**

(22) Anmeldetag: **12.12.87**

(54) **Radialwellendichtung.**

(30) Priorität: **24.12.86 CH 5176/86**

(43) Veröffentlichungstag der Anmeldung:
**03.08.88 Patentblatt 88/31**

(45) Bekanntmachung des Hinweises auf die
Patenterteilung:
**27.11.91 Patentblatt 91/48**

(84) Benannte Vertragsstaaten:
**AT CH DE FR GB IT LI SE**

(56) Entgegenhaltungen:
**FR-A- 921 966**
**FR-A- 1 332 567**
**FR-A- 2 524 597**

**MTZ Motortechnische Zeitschrift 42 (1981)**
**7/8, Seite 288**

(73) Patentinhaber: **AGINFOR AG für industrielle**
**Forschung**
**Alberich-Zwyssig-Strasse 49**
**CH-5430 Wettingen(CH)**

(72) Erfinder: **Schwarz, Martin**
**Rütisteig 1**
**CH-5115 Möriken(CH)**

(74) Vertreter: **Klein, Ernest**
**Sandstrasse 24**
**CH-5416 Kirchdorf AG(CH)**

## Beschreibung

Gebiet der Erfindung

Die Erfindung betrifft einen Radialwellendichtring, insbesondere für schnelldrehende, exzentrisch umlaufende Wellen, welcher mit seiner radial aussenliegenden Partie in dem die Welle umgebenden Maschinenteil statisch dichtend fixiert ist und mit einer sich an einem radialen Steg anschliessenden flexiblen Dichtlippe die Welle elastisch umschliesst,
- wobei die Elastomer-Dichtlippe über Federmittel an die Lauffläche der Welle angedrückt ist,
- und wobei die Dichtung mit einer in den Ring einvulkanisierten Stirnwandversteifung versehen ist.

Bei Anwendung in Kurbel- oder Exzenterantrieben unterliegen derartige Dichtungen einer kreisenden oder annähernd kreisenden Bewegung. Wird die entsprechende Maschine mit sehr hoher Drehzahl betrieben, so treten in dieser Dichtung derart grosse Massenkräfte auf, dass sich die Dichtlippe örtlich von der Welle abheben kann. Es entsteht ein Spalt, Schmieröl fliesst aus und der Zweck der Wellendichtung ist nicht mehr erfüllt.

Stand der Technik

Um Abhilfe zu schaffen, ist es bekannt, die radiale Steifigkeit durch einvulkanisierte Metallringe zu erhöhen oder die Vorspannung der Ringfeder, die in der Regel die Dichtlippe anpresst, zu vergrössern (z.B. ans der FR-A-2524597 = DE-A-3212476). Durch diese Massnahmen wird jedoch die Elastizität der Dichtung kleiner. Die Anpassungsfähigkeit der Dichtung bei Wellenverlagerungen nimmt ab. Zudem haben solche Dichtungen im Mittel höhere Anpresskräfte zwischen dem stehenden Dichtring und der rotierenden Welle, was zu Erwärmung und zu erhöhtem Verschleiss und damit zu reduzierter Lebendauer führt.

Eine andere Lösung sieht vor, den Dichtring auf den Exzenter selbst anzuordnen, wobei der Dichtring rotiert und die Dichtlippe gegenüber dem nicht rotierenden, jedoch kreisenden Teil dichtet. Verschiedene Stellen des Dichtringes liegen hier auf unterschiedlichen Radien zur raumfesten Drehachse und unterliegen daher verschieden grossen Fliehkräften. An den aussenliegenden Partien des Dichtringes verstärkt die Fliehkraft die Dichtkraft mehr als an den inneren Partien. Hier kann die Dichtkraft sogar mit der Fliehkraft abnehmen, falls die Exzentrizität grösser ist als der Dichtringradius. Die Vorspannung der Dichtlippe ist so zu wählen, dass der Dichtring in allen Betriebsfällen sicher dichtet. Die Fliehkraft erhöht die Dichtreibung derart, dass die entstehende Reibungswärme nicht mehr genügend abgeführt werden kann. Der Dichtring verhärtet, verschleisst, wird undicht und kann die Welle beschädigen.

Darstellung der Erfindung

Der Erfindung liegt deshalb die Aufgabe zugrunde, einen Dichtring der eingangs genannten Art zu schaffen, welcher unempfindlich gegenüber Beschleunigungen in der Ebene senkrecht zur Längsachse ist, dabei jedoch nichts an seiner Nachgiebigkeit einbüsst.

Erfindungsgemäss wird dies dadurch erreicht, dass das radial innenliegende Ende der Stirnwandversteifung den Drehpunkt für die auszulenkende Dichtlippe bildet, und dass am Drehpunkt ein im wesentlichen axial verlaufendes und über den radialen Steg hinauskragendes Gegengewicht angreift, dessen Massenkraft mindestens jener der Dichtlippe und der darauf wirkenden Federkraft entspricht.

Die Erfindung geht hierbei davon aus, das Ausweichen oder Auslenken der Dichtung infolge der Trägheitskräfte nicht durch zusätzlich Federkräfte, also beispielsweise durch Versteifung der Lippen, zu verhindern, sondern die Trägheitskräfte selbst zu nützen durch Anordnung von Gegengewichten, die der gleichen Beschleunigungskraft unterworfen sind wie die Dichtlippe selbst. Dabei sind die Gegengewichte so zu wählen, dass die Massenkräfte der Dichtlippe ausgeglichen sind.

Es ist von Vorteil, wenn das Gegengewicht ein Waagebalken ist, der über den Drehpunkt hinaus bis in die eigentliche Dichtebene in das Elastomer einvulkanisiert ist. Hierdurch bilden Dichtlippe und Gegengewicht eine in sich steife Einheit mit eindeutiger Abstützung am radial innenliegenden Ende der Stirnwandversteifung.

Es ist zweckmässig, wenn der Waagebalken ringzylindrisch ausgebildet ist, in der Ebene des Drehpunktes geschlossen ist und beidseitig des Drehpunktes in Umfangsrichtung mehrfach geschlitzt ist, wobei die Schlitze in ihrer axialen Erstreckung so bemessen und angeordnet sind, dass einerseits der Waagebalken in der Ebene der Längsachse zusammen mit der Dichtlippe eine biegesteife Einheit bildet, und andererseits der Waagebalken in der Ebene senkrecht zur Längsachse biegeweich ist. Dadurch ist die Möglichkeit gegeben, die Gegengewichte als einteiliges Element zu fertigen und in den Dichtring einzuvulkanisieren.

Kurze Beschreibung der Zeichnung

In der Zeichnung sind zwei Ausführungsbeispiele der Erfindung schematisch dargestellt.
Es zeigen:
Fig. 1    einen Längsschnitt durch eine Exzenteranordnung;

Fig. 2     einen Längsschnitt durch den erfindungsgemässen Radialwellendichtring;

Fig. 3     die Abwicklung eines Zylinderschnittes durch den Dichtring auf der Höhe des Drehpunktes am radial inneren Ende der Stirnwandversteifung;

Fig. 4     eine Ausführungsvariante des Dichtringes.

Gleiche Elemente sind in den verschiedenen Figuren mit gleichen Bezugszeichen versehen. Es sind nur die für das Verständnis der Erfindung wesentlichen Elemente gezeigt. Nicht dargestellt sind beispielsweise jene Mittel, die dafür sorgen, dass die vom Exzenter betätigten Mittel eine blosse Kreisbewegung, nicht jedoch eine Drehbewegung ausführen.

Wege zur Ausführung der Erfindung

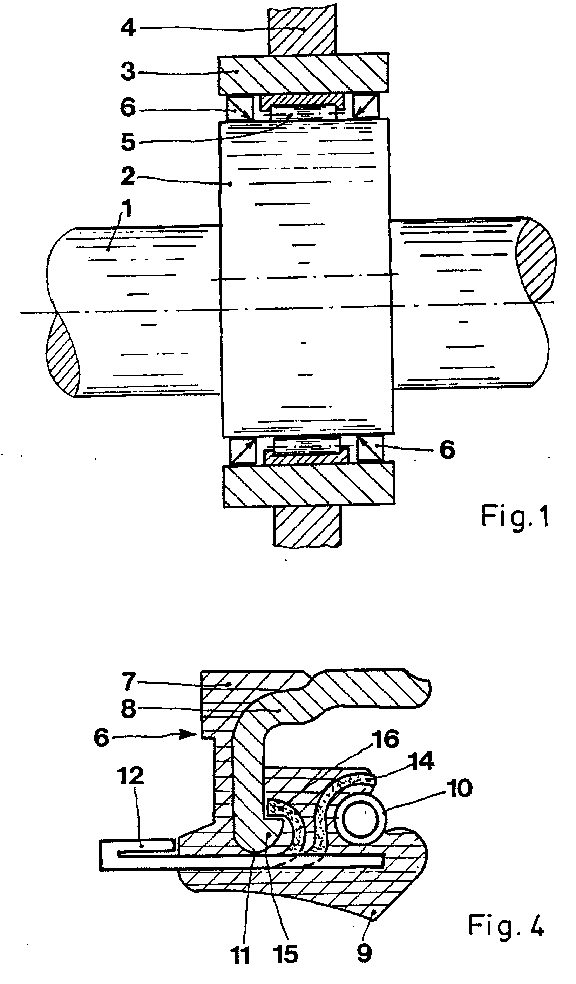

In Fig. 1 ist mit 1 eine Antriebswelle bezeichnet, die einen Exzenterbund 2 aufweist. Auf diesem Bund ist eine Büchse 3 eines scheibenförmigen Maschinenteils 4 mittels eines Wälzlagers 5 gelagert. Bei diesem Maschinenteil kann es sich beispielsweise um die Läuferscheibe eines Spiralverdichters handeln. Das Wälzlager 5 ist nach beiden Seiten hin flüssigkeitsdicht durch Ringdichtungen 6 abgedichtet.

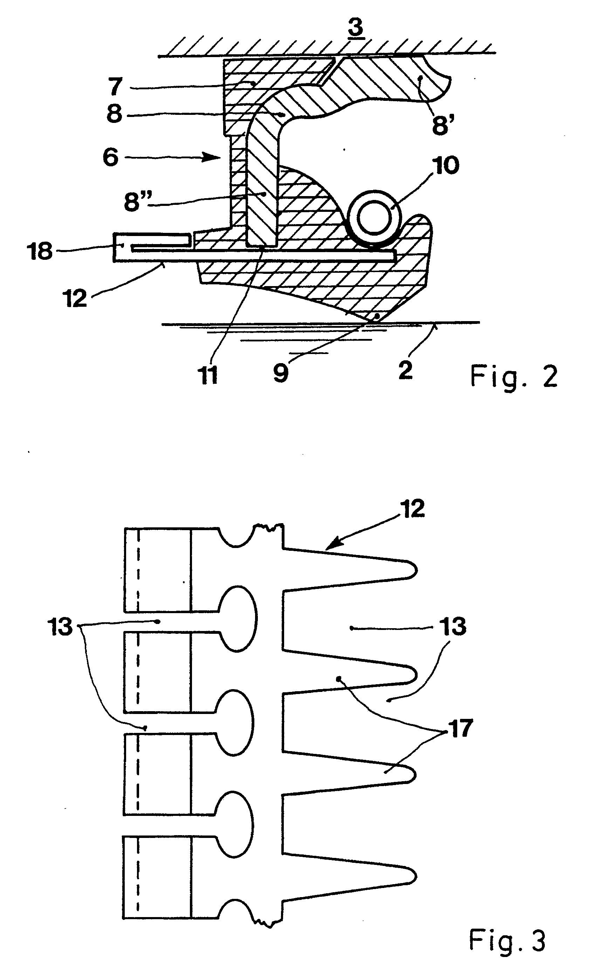

Bei diesen Dichtungen handelt es sich um Radialwellendichtringe, die gemäss Fig. 2 im wesentlichen aus einem L-förmigen Elastomer 7, beispielsweise Nitrilkautschuk mit einvulkanisierter, stählerner Stirnwandversteifung 8 bestehen. Im gezeigten Beispiel ist diese Versteifung 8 ebenfalls von L-förmiger Ausbildung, wobei der axiale Schenkel 8' der radial aussenliegende Teil ist und somit den Sitz des Ringes in der Büchse 3 des Maschinenteils 4 bildet.

Der radiale Schenkel 8" bildet die eigentliche Versteifung und reicht mit seinem radial inneren Ende bis in den axialen Schenkel des Elastomers. Dieser axiale Schenkel weist die eigentliche Dichtlippe 9 auf, welche über Federmittel 10, hier eine Ringfeder, an den exzentrisch umlaufenden Wellenteil, hier der Bund 2, angepresst wird.

Wie bereits oben erwähnt, führt die im Maschinenteil 4 statisch dichtend fixierte Dichtung 6 während des Betriebes eine kreisende Bewegung aus. Nun sind alle kreisenden Teile, also auch die Dichtlippe 9, einer Beschleunigung unterworfen, die mit der Drehzahl und dem Kurbelradius zunimmt. Diese Beschleunigung bewirkt eine Trägheitskraft, die die Dichtlippe einmal anzupressen und ein andermal abzuheben trachtet. Die Umfangskomponente dieser Trägheitskraft soll hier nicht betrachtet werden, da die Dichtlippe in Umfangsrichtung sehr steif ist und eine Bewegung in dieser Richtung nur einen kleinen Beitrag zum Abheben der Dichtlippe leistet. Die Dichtlippe muss in radialer Richtung nachgiebig sein, damit sie ihre Aufgabe, Achsverlagerungen auszugleichen und Verschleiss zu kompensieren, erfüllen kann.

Hierzu ist es aus der MTZ Motortechnische Zeitschrift 42 (1981) 7/8, Seite 288, Bild 7 bekannt, dass der axiale Schenkel des Elastomerkörpers 7 einen eigentlichen Drehpunkt aufweist, um den die Auslenkung der Dichtlippe stattfinden kann.

Gemäss der Erfindung wird nun der an die Dichtlippe 9 anschliessende Teil des axialen Elstomerschenkels so konfiguriert und in seiner Wandstärke bemessen, dass der Drehpunkt 11 unmittelbar unterhalb des radial innenliegenden Endes des radialen Schenkels 8" der Versteifung 8 zu liegen kommt. An der guten Nachgiebigkeit der Dichtlippe in radialer Richtung ändert sich dadurch nichts.

Zur Kompensation der auf die Dichtlippe 9 mitsamt Feder 10 einwirkenden Beschleunigungskräfte wird nun jenseits des Drehpunktes 11 ein Gegengewicht 12 angeordnet. Dieses Gegengewicht, in Form eines beispielsweise stählernen Waagebalkens, greift ebenfalls am Drehpunkt 11 an. Der Waagebalken, dessen Ausgleichsmasse mindestens jener der Dichtlippe mitsamt Feder entspricht, verläuft in axialer Richtung und kragt somit über den radialen Schenkel des Elastomers hinaus. Er ist über den Drehpunkt 11 hinaus weit in den axialen Schenkel des Elastomers, d.h. bis mindestens zur Dichtebene hin, in den Kautschuk einvulkanisiert und bildet somit zusammen mit der Dichtlippe eine steife, um den Drehpunkt kippbare Einheit. Diese Kippmöglichkeit ist erforderlich, beispielsweise beim Taumeln der Welle resp. des exzentrischen Bundes 2.

Das Problem wurde bis jetzt nur in der Ebene der Längsachse betrachtet. Aus der Abwicklung nach Fig. 3 ist erkennbar, dass es sich beim Waagebalken um einen geschlossenen, zylindrischen Metallring handelt. Geschlossen ist er allerdings nur in jener Zone unterhalb der Stirnwandversteifung, die als Drehpunkt gilt. Diesseits und jenseits der Drehzone ist der Ring geschlitzt. Dadurch ist er in Umfangsrichtung biegeweich und kann in radialer Richtung auch einer nicht ganz konzentrisch umlaufenden Welle folgen.

Der Ausdruck "geschlitzt" besitzt hier Allgemeingültigkeit und steht für alle möglichen, vorzugsweise ausgestanzten Konfigurationen, die die angestrebte Funktion erfüllen.

Der in Fig. 3 gezeigte Ringzylinder weist auf der Lippenseite Spitzen 17 auf, die über die Dichtebene hinaus im nicht dargestellten Elastomer einvulkanisiert sind und insbesondere der Verankerung dienen; auf der entgegengerichteten, aus dem Elastomer herausragenden Seite befindet sich das eigentliche Gegengewicht in Form der hier einfach gefalteten Stahleinlage 18 (Fig. 2).

Beim Dichtring gemäss Fig. 4 wird die Dichtkraft ebenfalls über eine Ringfeder 10 aufgebracht. Die Federmittel, die -verglichen mit der Dichtlippe - aus einem Werkstoff höherer Dichte gefertigt ist, unterliegt den Trägheitskräften noch stärker. Bei sehr hohen Beschleunigungen quer zur Achse kann somit auch diese Feder von ihrer Auflage abheben. Dies kann durch mehrere, am Umfang verteilte Klammern 14 verhindert werden, welche die Feder teilweise umschliessen. Diese Klammern sind vorzugsweise integrale Bestandteile des Ringzylinders; gegebenenfalls handelt es sich um das zwischen den Ankerspitzen 17 ausgesparte Material, das entsprechend aufgebogen ist.

Ein weiteres Problem können Kräfte darstellen, die infolge der umlaufenden Beschleunigung im Drehpunkt 11 zum Zentrum hin gerichtet sind. Das Auflager, d.h. das radial innere Ende der Stirnwandversteifung 8 trägt nicht eindeutig; es kann nur jene Kräfte aufnehmen, die vom Waagebalken ausgehen und nach aussen gerichtet sind. Die nach innen gerichteten Kräfte können ohne Gegenmassnahmen somit zu unerwünschten Verformungen im Elastomer führen. Gemeint ist hier jene Kautschukzone, in welcher der Waagebalken unmittelbar an der Stirnwandversteifung eingebettet ist. Die Kräfte sind demnach nicht durch das Elastomer aufzunehmen. Im vorliegenden Fall ist am radialen Schenkel 8" der Stirnwandversteifung 8 ein axial gerichteter Ansatz 15 vorgesehen. Dieser kann ringförmig über den gesamten Umfang verlaufen. Klammerartig greifen mehrere über den Umfang verteilte Haken 16 in diesen Ansatz 15 ein. Wie die Klammern 14 sind auch diese Haken 16 vorzugsweise integrale Bestandteile des Zylinderringes.

Selbstverständlich ist die Erfindung nicht auf die gezeigten und beschriebenen Ausführungsbeispiele beschränkt. In Abweichung zur gezeigten Ring- oder Rundfeder könnten genausogut über den Umfang verteilte Blattfedern die Anpresskraft der Dichtlippe aufbringen. Diese sehr viel leichteren Blattfedern könnten in die Versteifungselemente integriert werden, was den Vorteil aufweist, dass zum einen weniger Teile, zum anderen weniger Ausgleichsmasse erforderlich wäre.

Besonders günstig wären derartige Blattfedern bei aussen dichtenden Ringen, d.h. Anordnungen, bei denen der Dichtring auf dem Exzenter angeordnet ist und somit mitrotiert, und bei denen die Dichtlippe am kreisenden Maschinenteil abdichtet. Es versteht sich, dass auch derartige Anordnungen nicht aus dem Rahmen der Erfindung fallen.

Desweiteren wäre es denkbar, auf der Seite des überkragenden Waagebalkens eine an sich bekannte Stahllippe im Elastomer zu integrieren. In Funktionsverschmelzung mit dem steifen Balken ist die Stahllippenmasse dann als Gegengewicht wirksam.

In Abweichung zur beanspruchten Lösung könnte die Masse des Gegengewichtes auch etwas kleiner sein als jene der Dichtlippe. Diese Lösung, bei welcher nur eine Teilkompensation stattfindet, würde sich ggfs. bei sehr prekären Platzverhältnissen aufdrängen.

**Patentansprüche**

1. Radialwellendichtring, insbesondere für schnelldrehende, exzentrisch umlaufende Wellen (1), welcher mit seiner radial aussenliegenden Partie in dem die Welle umgebenden Maschinenteil (3, 4) statisch dichtend fixiert ist und mit einer, sich an einen radialen Steg anschliessenden, flexiblen Dichtlippe die Welle elastisch umschliesst,
   - wobei die Elastomerdichtlippe (9) über Federmittel (10) an die Lauffläche der Welle (1, 2) angedrückt ist,
   - und wobei die Dichtung (6) mit einer in den Ring einvulkanisierten Stirnwandversteifung (8) versehen ist,

   dadurch gekennzeichnet,
   dass das radial innenliegende Ende der Stirnwandversteifung (8) den Drehpunkt (11) für die auszulenkende Dichtlippe (9) bildet, und dass am Drehpunkt (11) ein im wesentlichen axial verlaufendes und über den radialen Steg hinausragendes Gegengewicht (12) angreift, dessen Masse mindestens jener der Dichtlippe (9) und der darauf wirkenden Federmittel (10) entspricht.

2. Dichtung nach Anspruch 1, dadurch gekennzeichnet, dass das Gegengewicht (12) ein Waagebalken ist, der über den Drehpunkt (11) hinaus bis in die eigentliche Dichtebene in das Elastomer einvulkanisiert ist.

3. Dichtring nach Anspruch 2, dadurch gekennzeichnet, dass der Waagebalken ringzylindrisch ausgebildet ist, in der Ebene des Drehpunktes (11) geschlossen ist und beidseitig des Drehpunktes in Umfangrichtung mehrfach geschlitzt ist, wobei die Schlitze (13) in ihrer axialen Erstreckung so bemessen und angeordnet sind, dass einerseits der Waagebalken in der Ebene der Längsachse zusammen mit der Dichtlippe eine biegesteife Einheit bildet, und andererseits der Waagebalken in der Ebene senkrecht zur Längsachse biegeweich ist.

4. Dichtring nach Anspruch 1, dadurch gekennzeichnet, dass im Fall einer Ringfeder als Federmittel der Waagebalken mit einer die Ringfeder zumindest teilweise umschliessenden Klammer (14) versehen ist.

5. Dichtring nach Anspruch 1, dadurch gekennzeichnet, dass die Stirnwandversteifung (8) einen vorzugsweise axialen Ansatz (15) aufweist, der klammerartig umgeben ist von einem am Waagebalken angeordneten Haken (16).

6. Dichtring nach den Ansprüchen 3, 4 und 5, dadurch gekennzeichnet, dass der Waagebalken (12), die Klammern (14) und Haken (16) als einteiliges Element gefertigt und im Dichtring einvulkanisiert sind.

## Claims

1. Radial shaft sealing ring, in particular for rapidly turning, eccentrically rotating shafts (1), which is fixed in a statically sealing manner with its radially outside portion in the machine part (3, 4) surrounding the shaft and which envelops the shaft in an elastic manner with a flexible sealing lip which adjoins a radial web,
   - the elastomeric sealing lip (9) being pressed by spring means (10) onto the running surface of the shaft (1, 2),
   - and the seal (6) being provided with an end wall reinforcement (8) which is vulcanised into the ring,
   characterised in that the radially inside end of the end wall reinforcement (8) forms the pivot point (11) for the sealing lip (9) to be deflected, and in that there acts on the pivot point (11) a counter-weight (12) which extends essentially axially, projects beyond the radial web, and the mass of which corresponds at least to that of the sealing lip (9) and the spring means (10) acting thereon.

2. Seal according to Claim 1, characterised in that the counter-weight (12) is a balance arm which is vulcanised into the elastomer beyond the pivot point (11) into the actual sealing plane.

3. Sealing ring according to Claim 2, characterised in that the balance arm is of cylindrical construction, is closed in the plane of the pivot point (11) and is slotted in a plurality of places in the circumferential direction on both sides of the pivot point, the slots (13) being dimensioned and arranged in their axial extension in such a way that, on the one hand, the balance arm forms a rigid unit in the plane of the longitudinal axis together with the sealing lip and, on the other hand, the balance arm is flexible in the plane perpendicular to the longitudinal axis.

4. Sealing ring according to Claim 1, characterised in that, in the case of an annular spring as spring means, the balance arm is provided with a clamp (14) which at least partially envelops the annular spring.

5. Sealing ring according to Claim 1, characterised in that the end wall reinforcement (8) has a preferably axial shoulder (15) which is surrounded in the manner of a clamp by a hook (16) arranged on the balance arm.

6. Sealing ring according to Claims 3, 4 and 5, characterised in that the balance arm (12), the clamps (14) and hooks (16) are fabricated as an integral element and are vulcanised into the sealing ring.

## Revendications

1. Bague à lèvre avec ressort, en particulier pour des arbres (1) à rotation excentrique à grande vitesse, qui est statiquement fixée, de manière étanche, par sa partie radialement extérieure, dans la pièce de la machine (3, 4) entourant l'arbre et qui entoure élastiquement l'arbre avec une lèvre d'étanchéité qui se raccorde à une âme radiale,
   - dans laquelle la lèvre d'étanchéité en élastomère (9) est appliquée sur la surface de glissement de l'arbre (1, 2) par des moyens formant ressort,
   - et dans laquelle la garniture (6) est pourvue d'un raidisseur frontal (8) vulcanisé dans la bague,
   caractérisée en ce que
   l'extrémité radialement intérieure du raidisseur frontal (8) constitue le point d'appui (11) pour la lèvre d'étanchéité (9) à dévier, et en ce qu'au point d'appui (11) agit un contrepoids (12) essentiellement axial et saillant au-delà de l'âme radiale, dont la force massique correspond au moins à celle de la lèvre d'étanchéité (9) et des moyens formant ressort (10) agissant sur celle-ci.

2. Garniture suivant la revendication 1, caractérisée en ce que le contrepoids (12) est un fléau de balance, qui est noyé par vulcanisation dans l'élastomère jusqu'au plan d'étanchéité proprement dit, en passant par le point d'appui (11).

3. Bague à lèvre suivant la revendication 2, caractérisée en ce que le fléau de balance est un anneau cylindrique, fermé dans le plan du point d'appui (11) et présentant plusieurs encoches circonférentielles de part et d'autre du point d'appui, les encoches (13) étant dimensionnées, en direction axiale, et disposées de telle façon que d'une part le fléau de balance forme avec la lèvre d'étanchéité une unité rigide à la flexion dans le plan de l'axe longitudinal et que d'autre part le fléau de balance soit flexible dans le plan perpendiculaire à l'axe longitudinal.

4. Bague à lèvre suivant la revendication 1, caractérisée en ce que, dans le cas où les moyens formant ressort sont constitués par une bague élastique, le fléau de balance est pourvu d'au moins une pince (14) entourant au moins partiellement la bague élastique.

5. Bague à lèvre suivant la revendication 1, caractérisée en ce que le raidisseur frontal (8) présente un rebord (15) de préférence axial, qui est entouré par des crochets (16) fixés au fléau de balance et agissant comme des pinces.

6. Bague à lèvre suivant les revendications 3, 4 et 5, caractérisée en ce que le fléau de balance (12), les pinces (14) et les crochets (16) ne forment qu'un seul élément et sont noyés par vulcanisation dans la bague à lèvre.

Fig.1

Fig. 4

EP 0 276 441 B1

Fig. 2

Fig. 3